# EUROPÄISCHE PATENTSCHRIFT

(11) **EP 4 262 379 B1**
(45) Veröffentlichungstag und Bekanntmachung des Hinweises auf die Patenterteilung: **09.10.2024**
(21) Anmeldenummer: 21810299.4
(22) Anmeldetag: 08.11.2021
(51) Int. Cl.: A01M 7/00

(54) **VERFAHREN UND VORRICHTUNG ZUM AUSBRINGEN EINES SPRITZMITTELS AUF EINE LANDWIRTSCHAFTLICHE FLÄCHE**
METHOD AND DEVICE FOR APPLYING A SPRAYING AGENT TO AGRICULTURAL LAND
PROCÉDÉ ET DISPOSITIF D'APPLICATION D'UN LIQUIDE DE PULVÉRISATION SUR DES TERRES AGRICOLES

(30) Priorität: 15.12.2020 DE 102020215878
(43) Veröffentlichungstag der Anmeldung: 25.10.2023
(73) Patentinhaber: Robert Bosch GmbH, 70442 Stuttgart (DE)
(72) Erfinder: WEIMER, Andreas, 71116 Gaertringen (DE); VON HORSTIG, Carl-Ludwig, 35452 Heuchelheim (DE); HOUIS, Nicolas, 74321 Bietigheim-Bissingen (DE); KHANI, Farid, 70599 Stuttgart (DE); SCHAEFER, Christoph, 57334 Bad Laasphe (DE)
(86) Internationale Anmeldenummer: PCT/EP2021/080921
(87) Internationale Veröffentlichungsnummer: WO 2022/128254

(56) Entgegenhaltungen:
- WO-A1-2020/169817
- WO-A1-2021/048001
- DE-A1- 102018 203 758
- DE-A1- 102018 217 742
- DE-A1- 102018 222 428
- US-A1- 2021 386 051

## Beschreibung

### Stand der Technik

Die Erfindung betrifft ein Verfahren zum Ausbringen eines Spritzmittels auf eine landwirtschaftliche Fläche mittels zumindest einer Spritzdüseneinheit einer landwirtschaftlichen Spritzvorrichtung sowie eine Anordnung mit zumindest einer ersten und zweiten optischen Erfassungseinheit und eine landwirtschaftliche Spritzvorrichtung zum Ausbringen eines Spritzmittels nach Gattung der unabhängigen Ansprüche.

Algorithmen zur Pflanzreihenerkennung sind bekannt. Die Basis hierfür sind in den meisten Fällen Kameraaufnahmen, welche von einer Feldmaschine aus gemacht wurden. Diese Aufnahmen sind mit starken Neigungswinkeln aufgenommen und zeigen einen möglichst großen Bildabschnitt, um die Detektion von Pflanzreihen möglichst zu vereinfachen.

Ferner sind Verfahren zur Unkrautdetektion und -klassifikation bekannt, welche unter Verwendung hochauflösender kleiner Bilder und vorzugsweise ohne Neigungswinkel durchgeführt werden, um eine ausreichende Bildauflösung für die Detektion kleiner Pflanzenobjekte zu erhalten. Hierbei kann es zu falschen Zuordnung von Kulturpflanzenteilen kommen, wenn Kulturpflanzen bzw. eine Kultur-Pflanzreihe durch den Rand des Sichtfelds geschnitten werden, da diese Teile meistens per Definition als Unkräuter klassifiziert werden.

Die DE 10 2018 217742 A1 offenbart ein Verfahren zum Ausbringen eines Spritzmittels, insbesondere eines Pflanzenschutzmittels, auf ein Feld mittels einer landwirtschaftlichen Spritzvorrichtung.

### Offenbarung der Erfindung

Gegenstand der vorliegenden Erfindung ist ein Verfahren zum Ausbringen eines Spritzmittels auf eine landwirtschaftliche Fläche mittels zumindest einer Spritzdüseneinheit einer landwirtschaftlichen Spritzvorrichtung, mit den Schritten:
- Erfassen eines ersten Feldabschnitts der landwirtschaftlichen Fläche und eines quer zu einer Fahrtrichtung der landwirtschaftlichen Spritzvorrichtung benachbart zu dem ersten Feldabschnitt angeordneten zweiten Feldabschnitts der landwirtschaftlichen Fläche mittels zumindest einer optischer Erfassungseinheiten, um eine erste Bildinformation von dem ersten Feldabschnitt und eine zweite Bildinformation von dem zweiten Feldabschnitt zu erhalten, wobei die Bildinformationen einen gemeinsamen seitlichen Überlappungsbereich mit einer in Fahrtrichtung der landwirtschaftlichen Spritzvorrichtung Tiefe T(Überlapp) aufweisen;
- Klassifizieren von Pflanzen in den erhaltenen Bildinformationen mittels der Steuereinheit;
- Ermitteln einer ersten Pflanzenkennzahl für einen ersten Bildauswertebereich in der erhaltenen ersten Bildinformation und einer zweiten Pflanzenkennzahl für einen zweiten Bildauswertebereich in der erhaltenen zweiten Bildinformation unter Verwendung der klassifizierten Pflanzen in den Bildauswertebereichen mittels der Steuereinheit, wobei die Bildauswertebereiche im seitlichen Überlappungsbereich aneinander angrenzen und eine in Fahrtrichtung der landwirtschaftlichen Spritzvorrichtung Tiefe T(Auswerte) aufweisen, welche kleiner als die oder gleich der Tiefe des Überlappbereiches T(Überlapp) ist; und
- Ausbringen des Spritzmittels in Abhängigkeit von der ermittelten zumindest einer Pflanzenkennzahl mittels der Spritzdüseneinheit der landwirtschaftlichen Spritzvorrichtung.

Gegenstand der vorliegenden Erfindung ist ferner eine Anordnung mit zumindest einer ersten und zweiten optischen Erfassungseinheit, insbesondere wobei eine optische Achse der optischen Erfassungseinheiten einen Neigungswinkel größer 0° relativ zu der Vertikalen in Fahrtrichtung einer Spritzvorrichtung aufweist, wobei die erste optische Erfassungseinheit ausgebildet ist, einen ersten Feldabschnitt der landwirtschaftlichen Fläche, und die zweite optische Erfassungseinheit ausgebildet ist, einen quer zu einer Fahrtrichtung der landwirtschaftlichen Spritzvorrichtung benachbart zu dem ersten Feldabschnitt angeordneten zweiten Feldabschnitt der landwirtschaftlichen Fläche zu erfassen, um eine erste Bildinformation von dem ersten Feldabschnitt und eine zweite Bildinformation von dem zweiten Feldabschnitt zu erhalten, wobei die optischen Erfassungseinheiten derart angeordnet sind, dass die Bildinformationen einen gemeinsamen seitlichen Überlappungsbereich mit einer in Fahrtrichtung der landwirtschaftlichen Spritzvorrichtung Tiefe T(Überlapp) aufweisen, sodass definierte Bildauswertebereiche in den erhaltenen Bildinformationen im seitlichen Überlappungsbereich aneinander angrenzen und eine in Fahrtrichtung der landwirtschaftlichen Spritzvorrichtung Tiefe T(Auswerte) aufweisen, welche kleiner als die oder gleich der Tiefe des Überlappbereiches T(Überlapp) ist.

Gegenstand der vorliegenden Erfindung ist außerdem eine landwirtschaftliche Spritzvorrichtung zum Ausbringen eines Spritzmittels auf eine landwirtschaftliche Fläche mit zumindest einer Spritzdüseneinheit und einer vorangehend beschriebenen Anordnung.

Gegenstand der vorliegenden Erfindung ist schließlich ein Computerprogramm das dazu eingerichtet ist, die Schritte eines vorangehend beschriebenen Verfahrens auszuführen, wenn das Computerprogramm auf einem Computer ausgeführt wird, sowie ein maschinenlesbares Speichermedium mit dem darauf gespeicherten Computerprogramm.

Das Verfahren ist für landwirtschaftliche Zwecke gedacht, jedoch nicht darauf beschränkt. Unter einem landwirtschaftlichen Zweck kann im Rahmen der vorliegenden Erfindung ein Zweck verstanden werden, der auf eine wirtschaftliche Kultivierung von Nutzpflanzen gerichtet ist.

Das Ausbringen des Spritzmittels erfolgt hierbei auf einer landwirtschaftlichen Fläche bzw. einer landwirtschaftlich genutzten Fläche. Hierunter können ein Feld oder eine Anbaufläche für Pflanzen oder auch eine Parzelle einer solchen Anbaufläche verstanden werden. Die landwirtschaftliche Fläche kann somit eine Ackerfläche, ein Grünland oder eine Weide sein. Die Pflanzen können beispielsweise Nutzpflanzen, deren Frucht landwirtschaftlich genutzt wird (beispielsweise als Nahrungsmittel, Futtermittel oder als Energiepflanze) sowie Beikräuter, Unkräuter und Ungräser umfassen.

Bevorzugt werden alle Schritte des Verfahrens während einer Bewegung, insbesondere einer Fahrt oder eines Fluges der landwirtschaftlichen Spritzvorrichtung über der landwirtschaftlichen Fläche durchgeführt. Somit kann im Rahmen der vorliegenden Anmeldung je nach Ausgestaltung der Spritzvorrichtung unter dem Begriff "Fahrtrichtung" auch eine "Flugrichtung" verstanden werden.

Vorteilhafterweise ist die landwirtschaftliche Spritzvorrichtung ausgebildet, das Verfahren automatisiert und/oder autonom durchzuführen, um eine schnelle, zuverlässige und effiziente Behandlung eines Feldes zu ermöglichen.

Die landwirtschaftliche Spritzvorrichtung kann insbesondere Teil einer landwirtschaftlichen Feldspritze bzw. eines Pflanzenschutzgerätes sein oder als eine landwirtschaftliche Feldspritze bzw. ein Pflanzenschutzgerät ausgebildet sein. Die landwirtschaftliche Spritzvorrichtung kann eine mobile Einheit umfassen oder auf einer mobilen Einheit angeordnet sein, wobei die mobile Einheit insbesondere als Landfahrzeug und/oder Luftfahrzeug und/oder Anhänger ausgebildet sein kann. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die landwirtschaftliche Spritzvorrichtung kann insbesondere eine gezogene Feldspritze, eine selbstfahrende Feldspritze oder eine Anbaufeldspritze sein. Die landwirtschaftliche Spritzvorrichtung kann auch an einer hydraulischen Vorrichtung einer landwirtschaftlichen Arbeitsmaschine angebaut sein. Denkbar ist auch, dass die landwirtschaftliche Spritzvorrichtung auf einer Ladefläche einer landwirtschaftlichen Arbeitsmaschine aufgebaut ist. Alternativ kann die Spritzvorrichtung an der landwirtschaftlichen Arbeitsmaschine angehängt sein. Die landwirtschaftliche Spritzvorrichtung bzw. die Feldspritze kann mindestens einen Spritzmitteltank zur Aufnahme des Spritzmittels aufweisen. Die landwirtschaftliche Spritzvorrichtung bzw. die Feldspritze kann hierbei auch eine Mischeinheit aufweisen, welche direkt auf der landwirtschaftlichen Spritzvorrichtung ein Spritzmittelkonzentrat mit Wasser zu dem auszubringenden Spritzmittel (an)mischt.

Das Spritzmittel ist insbesondere eine Spritzflüssigkeit. Das Spritzmittel kann ein landwirtschaftliches Präparat bzw. Pflanzenschutzmittel (PSM), insbesondere ein Pflanzenschutzmittelkonzentrat aufweisen oder sein. Das Spritzmittel kann demnach ein Pestizid, wie bspw. ein Herbizid, Fungizid oder ein Insektizid aufweisen. Das Spritzmittel kann jedoch auch ein Düngemittel, insbesondere ein Düngemittelkonzentrat aufweisen oder sein. Das Spritzmittel kann hierbei einen Wachstumsregulator aufweisen. Das Spritzmittel kann ein granulares Wirkmittel, welches mit einer Trägerflüssigkeit vermischt wurde, aufweisen. Die Spritzflüssigkeit kann bspw. ausgebildet sein als: Flüssigkeit, Suspension, Emulsion, Lösung oder eine Kombination daraus. Die Spritzflüssigkeit ist bevorzugt als mit Wasser verdünntes Pflanzenschutzmittel oder mit Wasser verdünntes Düngemittel ausgebildet. Die Spritzflüssigkeit kann demnach bspw. eine Spritzbrühe sein.

Das Ausbringen des Spritzmittels kann insbesondere mittels einer Fördereinheit durchgeführt werden. Hierbei kann die Fördereinheit ausgebildet sein, eine Flüssigkeit und/oder ein Granulat unter Druck zu fördern bzw. zu leiten, insbesondere zu dosieren. Demnach kann die Fördereinheit bspw. jeweils ein/eine/einen oder mehrere Pumpen, Förderpumpen, Dosierpumpen, Druckspeicher, Förderschnecken, Ventile, Blenden etc. umfassen. Die Spritzdüseneinheit weist bevorzugt jeweils mindestens eine Spritzdüse zum Ausbringen des Spritzmittels und mindestens ein Ventil zum Steuern bzw. Regeln der ausgebrachten Spritzmittelmenge auf. Demnach ist die Spritzdüseneinheit steuerbar bzw. betätigbar ausgebildet. Das Ventil kann in der Spritzdüse angeordnet bzw. integriert sein. Das Ventil kann jedoch auch der Spritzdüse vorgeschaltet, d.h. (in Strömungsrichtung des Spritzmittels) stromaufwärts der Spritzdüse angeordnet sein. Die Spritzdüseneinheit kann jedoch auch mehrere Spritzdüsen mit jeweils einem vorgeschalteten Ventil aufweisen. Die Spritzdüseneinheit kann ferner auch mehrere Spritzdüsen mit nur einem den Spritzdüsen vorgeschalteten Ventil aufweisen, so dass bei Betätigung des Ventils das Spritzmittel mittels aller Spritzdüsen der Spritzdüseneinheit ausgebracht wird. Das Ventil kann als ein pulsweitenmoduliertes Ventil (PWM-Ventil) oder als ein Proportionalventil ausgebildet sein. Die Spritzdüseneinheit kann als Teilbreite eines Düsensystems der landwirtschaftlichen Spritzvorrichtung ausgebildet sein. Die Spritzdüseneinheiten können einzeln bzw. separat und/oder in definierten Gruppen bzw. Verbänden und/oder alle gemeinsam ansteuerbar sein. Die Spritzdüsen jeder Spritzdüseneinheit können einzeln bzw. separat und/oder in definierten Gruppen bzw. Verbänden und/oder alle gemeinsam ansteuerbar sein.

Jeder Feldabschnittreihe (=Feldabschnitte entlang der Bewegungs- bzw. Fahrtrichtung) kann/können eine oder mehrere Spritzdüseneinheit(en) oder Spritzdüse(n) einer Spritzdüseneinheit zugeordnet sein. Bspw. kann jeder Feldabschnittreihe genau eine Spritzdüseneinheit bzw. Spritzdüse einer Spritzdüseneinheit oder genau zwei Spritzdüseneinheiten bzw. Spritzdüsen einer Spritzdüseneinheit zugeordnet sein, um diese zu behandelt.

Die optische Erfassungseinheit ist bevorzugt an der landwirtschaftlichen Spritzvorrichtung angeordnet. Die optische Erfassungseinheit kann zumindest eine multispektrale und/oder hyperspektrale und/oder Infrarot- und/oder Kamera und/oder 3D-Kamera umfassen. Die optische Erfassungseinheit kann ausgebildet sein, Bilder im NIR und/oder visuellen Bereich zu erfassen bzw. aufzunehmen. Die optische Erfassungseinheit kann eine Licht bzw. Beleuchtungseinheit aufweisen. Die optischen Erfassungseinheiten können ausgebildet sein miteinander zu kommunizieren. Bevorzugt sind die optischen Erfassungseinheiten jedoch derart ausgebildet, dass sei nicht miteinander kommunizieren. Jeder Feldabschnittreihe kann eine optische Erfassungseinheit zugeordnet sein. Es ist jedoch auch denkbar, dass eine optische Erfassungseinheit zwei oder mehrere Feldabschnittreihen erfasst. Bevorzugt weist eine optische Achse der mindestens einen optischen Erfassungseinheit einen Neigungswinkel größer 0° relativ zu der Vertikalen in Fahrtrichtung der Spritzvorrichtung aufweist. D.h., mit anderen Worten, dass die optische Erfassungseinheit in Fahrtrichtung nach vorne geneigt ist.

Die Spritzdüseneinheit bzw. die Spritzdüseneinheiten und die optische Erfassungseinheit bzw. die optischen Erfassungseinheiten sind bevorzugt an einem Spritzgestänge der landwirtschaftlichen Spritzvorrichtung angeordnet.

Der Schritt des Erfassens der Feldabschnitte kann bspw. während einer Überfahrt der landwirtschaftlichen Spritzvorrichtung mit den optischen Erfassungseinheiten über dem Feld erfolgen. Hierbei werden verständlicherweise die Feldabschnitte im Wesentlichen gleichzeitig von den optischen Erfassungseinheiten erfasst.

Das Verfahren wird bzw. die Verfahrensschritte werden verständlicherweise wiederholt durchgeführt. Hierbei werden die Schritte des Erfassens der Feldabschnitte bevorzugt in einem definierten, insbesondere festen oder in einem der Geschwindigkeit der landwirtschaftlichen Spritzvorrichtung angepassten Zeitintervall durchgeführt bzw. wiederholt durchgeführt. D.h., mit anderen Worten, dass die Feldabschnitte mit einer definierten oder einer geschwindigkeitsabhängigen Bildrate bzw. Bildfrequenz (=Wiederholrate) erfasst werden.

Ein erfasster Feldabschnitt kann ein Erfassungsabschnitt bzw. ein erfasster Bildabschnitt einer optischen Erfassungseinheit sein. Der erfasste Feldabschnitt ist bevorzugt der gesamte in dem Sichtfeld der optischen Erfassungseinheit erfasste Feldabschnitt.

Die Bildinformationen repräsentieren einen jeweils erfassten Feldabschnitt. Die Bildinformationen sind bevorzugt ein Bild bzw. Abbild des jeweils erfassten Feldabschnitts. Die Bildinformationen weisen bevorzugt in Fahrtrichtung jeweils einen hinteren Bildrand mit einer Breite B(Bild,h) und einen gleich großen oder größeren vorderen Bildrand mit einer Breite B(Bild,v) auf. Da die Feldabschnitte bevorzugt mit einem Neigungswinkel einer optischen Achse der optischen Erfassungseinheit von größer 0° relativ zu der Vertikalen in Fahrtrichtung der Spritzvorrichtung erfasst werden, weisen die vorderen Bildränder demzufolge eine größere vordere Breite B(Bild,v) als hintere Breite B(Bild,h) auf.

Die optischen Erfassungseinheiten sind bevorzugt derart angeordnet, dass einander zugewandte Endpunkte der hinteren Bildränder kongruent sind. Weiter bevorzugt sind die optischen Erfassungseinheiten derart angeordnet, dass die vorderen und hinteren Bildränder der Bildinformationen jeweils zueinander fluchten. Demnach sind die optischen Erfassungseinheiten bevorzugt derart angeordnet, dass ihre optischen Achsen entlang einer gemeinsamen Ebene quer zur Fahrtrichtung verlaufen. Folglich weisen die Bildinformationen bevorzugt in Fahrtrichtung der Spritzvorrichtung die gleiche Tiefe T(Bild) auf.

Des Weiteren sind die optischen Erfassungseinheiten derart angeordnet, dass die Bildinformationen einen gemeinsamen seitlichen Überlappungsbereich mit einer in Fahrtrichtung der landwirtschaftlichen Spritzvorrichtung Tiefe T(Überlapp) aufweisen. Hierbei ist die Tiefe T(Überlapp) des seitlichen Überlappungsbereichs kleiner als oder gleich groß ist wie die Tiefe T(Bild) der Bildinformationen. Der seitliche Überlappungsbereich ist bevorzugt dreieckförmig ausgebildet

In den Bildinformationen werden Pflanzen identifiziert und klassifiziert. Der Schritt des Identifizierens von Pflanzen kann ein Erfassen eines Farbanteils, insbesondere eines grünen Farbanteils und/oder eines Infrarotanteils in dem Feldabschnitt/Feldauswertebereich bzw. Bildabschnitt/Bildauswertebereich umfassen. Hierbei können mittels der optischen Erfassungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse bzw. vitale Pflanzen und Pflanzenteile vom Erdboden unterschieden wird. Im Schritt des Klassifizierens können die Pflanzen bspw. zwei Klassen zugeordnet werden. Die erste Klasse können "Kulturpflanzen" und die zweite Klasse können "Unkräuter" bzw. "Beikräuter" sein.

Im Schritt des Ermittelns wird eine erste Pflanzenkennzahl für einen ersten Bildauswertebereich in der erhaltenen ersten Bildinformation und eine zweite Pflanzenkennzahl für einen zweiten Bildauswertebereich in der erhaltenen zweiten Bildinformation unter Verwendung der klassifizierten Pflanzen in den Bildauswertebereichen ermittelt. Hierbei sind die Bildauswertebereiche derart ausgebildet, dass sie im seitlichen Überlappungsbereich aneinander angrenzen und eine in Fahrtrichtung der landwirtschaftlichen Spritzvorrichtung Tiefe T(Auswerte) aufweisen, welche kleiner als die oder gleich der Tiefe des Überlappbereiches T(Überlapp) ist. Bevorzugt weisen die Bildauswertebereiche in Fahrtrichtung jeweils einen hinteren Auswerterand mit einer Breite B(Auswerte,h) und einen gleich großen vorderen Auswerterand mit einer Breite B(Auswerte,v) auf. Die Breite B(Auswerte) der Bildauswertebereiche kann hierbei vordefiniert bzw. manuell wählbar sein. Die Breite B(Auswerte) der Bildauswertebereiche kann jedoch auch mittels der Steuereinheit variabel wählbar bzw. einstellbar sein, sodass Störungen kompensiert werden und die angrenzende Anordnung der Bildauswertebereiche zueinander sichergestellt werden können. Die vorderen und hinteren Auswerteränder der Bildauswertebereiche fluchten hierbei bevorzugt jeweils zueinander. Die vorderen Auswerteränder der Bildauswertebereiche können hierbei ferner mit den vorderen Bildändern der Bildinformationen fluchten. Bevorzugt ist ein gemeinsamer seitlicher Rand der Bildauswertebereiche quer zur Fahrtrichtung mittig im seitlichen Überlappungsbereich angeordnet.

Es sei angemerkt, dass in der Bildinformation weitere separate Bildauswertebereiche vorgesehen sein können, ohne den Rahmen der vorliegenden Erfindung zu verlassen. Der Bildauswertebereich gemäß der Erfindung weist einen seitlichen Auswerterand auf, der im seitlichen Überlappungsbereich angeordnet ist. In der Bildinformation kann ein weiterer Bildauswertebereich vorgesehen sein, der einen seitlichen Auswerterand in einem seitlichen Überlappungsbereich an einem gegenüberliegenden seitlichen Bildrand der Bildinformationen aufweist. Zusätzlich kann die Bildinformation einen oder mehrere mittig angeordnete Bildauswertbereiche aufweisen, die sich nicht bis zu einem seitlichen Überlappungsbereich erstrecken. Die Anzahl der Bildauswertebereiche pro Bildinformation ist abhängig vom Spritzdüsenabstand und der Breite der Bildinformation. Jeder Bildauswertebereich ist jeweils einer Spritzdüse zugeordnet. Bspw. wären bei einer Bildinformationsbreite von 1.5m und 25cm Spritzdüsenabstand 6 Bildauswertebereiche pro Kamera vorgesehen.

Somit sind die Bildauswertebereiche die Bereiche der Bildinformationen, in denen die Pflanzenkennzahlen ermittelt und ausgewertet werden, um in Abhängigkeit davon, das Spritzmittel auszubringen. Die Bildauswertebereiche repräsentieren hierbei einen entsprechenden Feldauswertebereich der erfassten Feldabschnitte, sodass im Schritt des Ausbringens das Spritzmittel bevorzugt auf den oder die entsprechenden Feldauswertebereich(e) ausgebracht wird.

Im Schritt des Ausbringens wird bei einer positiven "Spritzentscheidung" das Spritzmittel in Abhängigkeit von den ermittelten Pflanzenkennzahlen, insbesondere bei Erreichung und/oder Unterschreitung und/oder Überschreitung eines definierten Schwellenwertes für die Pflanzenkennzahl mittels der Spritzdüseneinheit der landwirtschaftlichen Spritzvorrichtung ausgebracht. Das Spritzmittel wird bevorzugt mit einer definierten Mindestmenge pro Fläche ausgebracht. Hierbei wird das Spritzmittel bevorzugt auf den gesamten Feldauswertebereich ausgebracht. Die Feldauswertebereiche, auf denen Spritzmittel mit der definierten Mindestmenge pro Fläche ausgebracht wird, werden nachfolgend auch bespritzte bzw. behandelte Feldauswertebereiche bezeichnet.

Die Pflanzenkennzahl repräsentiert bzw. ist bevorzugt einen Bedeckungsgrad des entsprechenden Bildauswertebereichs bzw. Feldauswertebereichs von pflanzlichem Material und/oder eine Menge an pflanzlichem Material in dem jeweiligen Bildauswertebereich bzw. Feldauswertebereich und/oder eine Anzahl von identifizierten Pflanzen in dem jeweiligen Bildauswertebereich bzw. Feldauswertebereich. Der Bedeckungsgrad kann über das Verhältnis von durch pflanzlichem Material bedeckter Fläche zu gesamter auszuwertenden Fläche definiert werden. Der Bedeckungsgrad für den Bildauswertebereich bzw. Feldauswertebereich ist demnach das Verhältnis der Fläche des bewachsenen Bereiches zum jeweiligen gesamten Bildauswertebereich. Dazu kann die Anzahl der Pixel in dem jeweiligen Bildauswertebereich bestimmt werden, an denen pflanzliches Material detektiert wird. Demnach kann mittels der Pflanzenkennzahl eine Maßzahl für den Befall abgeleitet werden, in Abhängigkeit derer entschieden wird, ob und ggf. wie (bspw. mit welcher Ausbringmenge) der entsprechende Feldauswertebereich bespritzt bzw. behandelt wird.

Der Schwellenwert kann manuell eingebbar, ein zuvor festgelegter und an das System übertragener, oder ein voreingestellter Wert und auf dem System fest eingestellter Wert sein. In Abhängigkeit der Kultur im Feld, des Wachstumsstadiums und des verwendeten Spritzmittel bzw. Pflanzenschutzmittels kann hierbei eine sog. Spritzregel hinterlegt sein, d.h. ein Zusammenhang zwischen einer bestimmten Pflanzenkennzahl und der Entscheidung, ob und wieviel Pflanzenschutzmittel appliziert werden soll. Als Beispiel könnte die Regel lauten: "Wenn der Bedeckungsgrad im Auswertebereich 0,5% übersteigt, dann wird auf den Feldauswertebereich appliziert".

Bevorzugt kann ein Schritt des Identifizierens von Pflanzenreihen in den Bildinformationen unter Verwendung der identifizierten und klassifizierten Pflanzen in den Bildinformationen vorgesehen sein, wobei im Schritt des Ausbringens das Spritzmittel ferner in Abhängigkeit von identifizierten Pflanzenreihen ausgebracht wird. Der Schritt des Identifizierens bzw. Erkennens von Pflanzenreihen kann durchgehend bzw. permanent durchgeführt werden. Der Schritt des Identifizierens von Pflanzenreihen erfolgt bevorzugt unter Verwendung und/oder Auswertung der gesamten bzw. im Wesentlichen gesamten erhaltenen Bildinformation, d.h. über die gesamte Tiefe T(Bild).

Vorteilhafterweise kann das Identifizieren der Pflanzenreihe unter Verwendung zumindest einer der folgenden Informationen erfolgen: Farbanteil, insbesondere grüner Farbanteil der erfassten Pflanzen, Infrarotanteil der erfassten Pflanzen, Pflanzenabstand, Pflanzreihenabstand, Wachstumsstadium der Pflanzen, Geokoordinaten einer Aussaat der Pflanzen. Mittels dieser Informationen bzw. Eigenschaften können die Pflanzenreihen auf einfache und sichere Art und Weise identifiziert werden. Da sich Pflanzenreihen im Wesentlichen geradlinig erstrecken, kann die Identifizierung einer Pflanzenreihe auch bspw. durch Einpassung einer Geraden bzw. einer geradlinigen Pflanzenreihenmittelpunktlinie in eine Bildtrajektorie mit dem höchsten grünen Farbanteil bzw. Grünwert erfolgen. In dem Schritt des Identifizierens werden bevorzugt alle Pflanzenreihen in dem erfassten Feldabschnitt bzw. der erhaltenen Bildinformation identifiziert.

Die Steuereinheit kann eine Recheneinheit oder eine Vielzahl von Recheneinheiten zum Verarbeiten von Signalen oder Daten, zumindest eine Speichereinheit zum Speichern von Signalen oder Daten, zumindest eine Kommunikationsschnittstelle zum Einlesen von Daten, insbesondere zum Empfangen von Bildinformationen und zum Ausgeben von Daten, insbesondere Steuersignalen an eine Einheit, insbesondere einen Aktor. Jeder optischen Erfassungseinheit kann eine Recheneinheit zugeordnet sein bzw. jede optische Erfassungseinheit kann eine eigene Recheneinheit aufweisen. Die Recheneinheit ist bzw. die Recheneinheiten sind zur Bildverarbeitung ausgebildet bzw. eingerichtet, sodass sie Berechnungsschritte bzw. Bildverarbeitungsschritte zur Durchführung des erfindungsgemäßen Verfahrens ausführen kann. Demnach weist jede Recheneinheit eine entsprechende Bildverarbeitungssoftware auf. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten bspw. elektrisch oder optisch aus einer entsprechenden Datenübertragungsleitung einlesen oder in eine entsprechende Datenübertragungsleitung ausgeben kann.

Demnach kann das erfindungsgemäße Verfahren beispielsweise in Software oder Hardware oder in einer Mischform aus Software und Hardware in der Steuereinheit bzw. einem Steuergerät implementiert sein.

Die Steuereinheit kann vollständig oder teilweise an der landwirtschaftlichen Spritzvorrichtung angeordnet bzw. in diese integriert sein. Die Steuereinheit kann jedoch auch vollständig oder teilweise extern, bspw. in einer Cloud integriert sein.

Die Definition der Auswertebereiche kann entweder innerhalb einer nachgelagerten Bildverarbeitungssoftware der Recheneinheit oder, wenn durch die optische Erfassungseinheit bzw. Kamera unterstützt, direkt als ROI-Definition (region of interest) auf Ebene des Imagerchips der optischen Erfassungseinheit bzw. Kamera erfolgen.

Durch das erfindungsgemäße Verfahren bzw. die erfindungsgemäße Anordnung können aufgrund der vorteilhaften Anordnung der Kameras zueinander und der vorteilhaften Ausgestaltung der Bildauswertebereiche in den Bildinformationen die richtige Zuordnung von Pflanzenteilen am seitlichen Bildrand verbessert und damit die Genauigkeit bei der Ermittlung der Pflanzenkennzahl erhöht werden. Dies wird insbesondere dadurch erreicht, dass die Klassifizierung aller identifizierten Pflanzen zunächst in den gesamten Bildinformationen erfolgt, die Ermittlung der Pflanzenkennzahlen jedoch in den definierten Bildauswertebereichen mit einer kleiner Breite, wobei diese derart zueinander angrenzen sind, dass das Feld in Querrichtung lückenlos ausgewertet werden kann. Somit kann es zwar weiterhin vorkommen, dass am Rand der Sichtfelder bzw. der Bildinformationen geschnittene Pflanzen falsch klassifiziert werden. Diese werden jedoch aufgrund der schmaleren Ausgestaltung der Bildauswertebereiche nicht bzw. nur zu einem geringen Anteil (falls diese in den Bildauswertebereich hineinragen) für die Spritzentscheidung ausgewertet.

Im Vergleich zu bekannten Auswerte- und Klassifikationsverfahren können die optischen Erfassungseinheiten gemäß der Erfindung entweder bei gleicher Höhe näher aneinander angeordnet werden, damit die schmaleren Bildauswertebereiche aneinander angrenzen, oder höher über dem Boden angeordnet werden, um das Sichtfeld und damit die Bildinformationen zu vergrößern.

### Zeichnungen

Die Erfindung wird nachstehend anhand der beigefügten Zeichnungen beispielhaft näher erläutert. Es zeigen:
- Fig. 1: eine schematische Darstellung einer erfindungsgemäßen landwirtschaftlichen Spritzvorrichtung;
- Fig. 2: eine schematische Darstellung einer grundsätzlichen geometrischen Anordnung von optischer Erfassungseinheit und Spritzdüseneinheit zueinander;
- Fig. 3: eine schematische Darstellung einer Anordnung von optischen Erfassungseinheiten und Bildinformationen;
- Fig. 4: eine Bildinformation mit einem Bildauswertebereich; und
- Fig. 5: ein Ablaufdiagramm eines Verfahrens gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

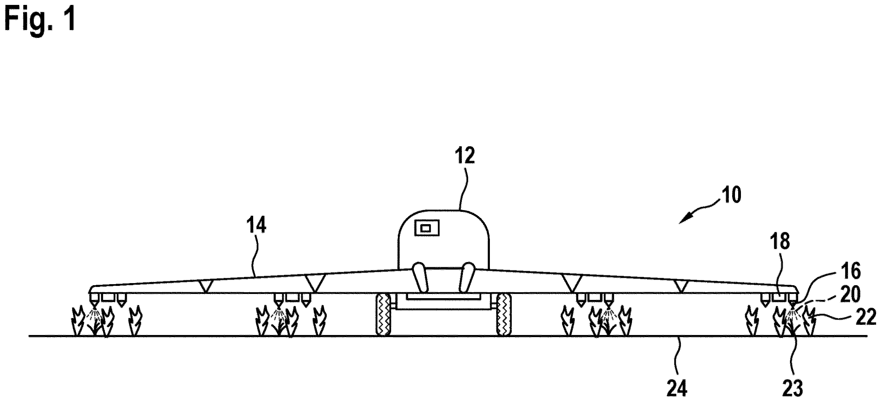

In Fig. 1 ist eine schematische Darstellung einer landwirtschaftlichen Spritzvorrichtung dargestellt, welche in ihrer Gesamtheit mit dem Bezugszeichen 10 versehen ist.

Die landwirtschaftliche Spritzvorrichtung 10 ist als Feldspritze 10 ausgebildet. Die Feldspritze 10 ist an einem mobilen Landfahrzeug 12 angeordnet, welches als Zugmaschine 12 bzw. Traktor 12 ausgebildet ist.

Die landwirtschaftliche Spritzvorrichtung 10 weist ein Spritzgestänge 14 auf. An dem Spritzgestänge 14 sind Spritzdüseneinheiten 16 und optische Erfassungseinheiten 18 angeordnet. Die Spritzdüseneinheiten 16 sind ausgebildet ein Spritzmittel 20 auf Pflanzen 22 bzw. Beikräuter 23 einer landwirtschaftlichen Fläche 24 auszubringen. Die optische Erfassungseinheiten 18 sind als optische Kameras 18 ausgebildet. Die optischen Kameras 18 umfassen jeweils eine Filtereinheit, um einen Farbanteil wie beispielsweise den grünen Farbanteil einer erhaltenen bzw. erfassten Bildinformation bzw. eines erfassten Bildes zu extrahieren, um Pflanzen 22 bzw. Beikräuter 23 zu erfassen.

Die landwirtschaftliche Spritzvorrichtung 10 weist ferner eine (nicht gezeigte) Fördereinheit auf, mittels derer die Ausbringmenge bzw. eine Wirkmittelmenge in dem auszubringenden Spritzmittel 20 einstellbar bzw. variierbar ist.

Die landwirtschaftliche Spritzvorrichtung 10 weist außerdem (nicht gezeigte) Steuereinheiten auf, welche mit den optischen Kameras 18 verbunden sind, um Informationen von diesen zu empfangen. Die Steuereinheiten weisen eine Recheneinheit auf, welche ausgebildet ist, Berechnungsschritte bzw. Bildverarbeitungsschritte zur Durchführung des erfindungsgemäßen Verfahrens auszuführen. Die Steuereinheiten sind ferner ausgebildet, ein Steuersignal derart auszugeben, dass das Spritzmittel 20 in Abhängigkeit von der ermittelten Pflanzenkennzahl mittels der zugehörigen Spritzdüseneinheiten 16 ausgebracht wird.

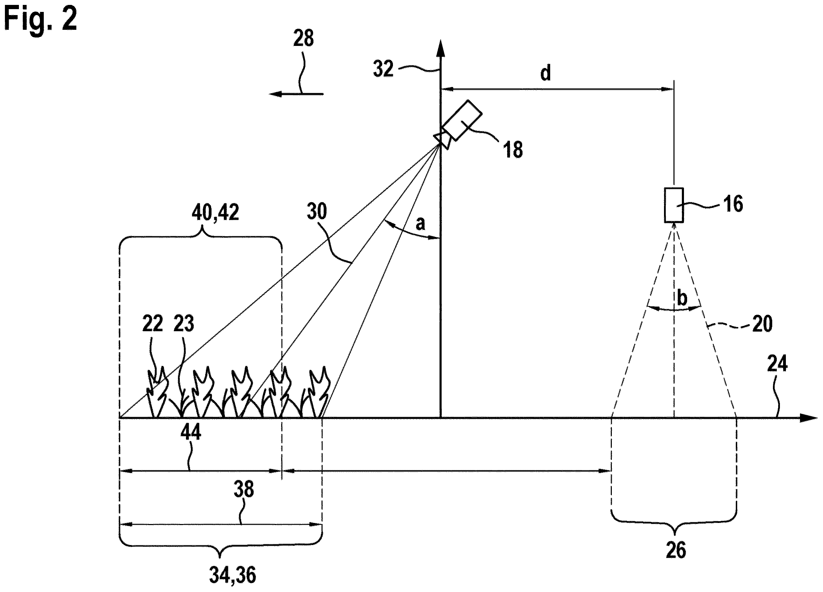

Fig. 2 zeigt eine grundsätzliche geometrische Anordnung einer Spritzdüseneinheit 16, welche im Fall einer positiven Spritzentscheidung das Spritzmittel 20 auf einen Spritzbereich 26 ausbringt, und einer geneigten optischen Erfassungseinheit 18 bzw. Kamera 18 auf der landwirtschaftlichen Spritzvorrichtung 10. Der Neigungswinkel a ist hierbei der Winkel in Fahrtrichtung 28 der Spritzvorrichtung 10 zwischen einer optischen Achse 30 der Kamera 18 und einer Vertikalen 32.

Wie aus Fig. 2 ferner ersichtlich, wird mittels der optischen Erfassungseinheit 18 ein Feldabschnitt 34 der landwirtschaftlichen Fläche 24 erfasst, um eine Bildinformation 36 von dem Feldabschnitt 34 mit einer in Fahrtrichtung 28 Tiefe T(Bild) 38 zu erhalten. Anschließend werden die Pflanzen 22, 23 in einem Bildauswertebereich 40 der erhaltenen Bildinformation 36 identifiziert und klassifiziert, wobei der Bildauswertebereich 40 einen entsprechenden Feldauswertebereich 42 des erfassten Feldabschnitts 34 mit einer in Fahrtrichtung 28 der Spritzvorrichtung 10 Tiefe T(Auswerte) 44 repräsentiert. In Abhängigkeit von einer ermittelten Pflanzenkennzahl für den Bildauswertebereich 40 wird dann mittels der Spritzdüseneinheit 16 das Spritzmittel 20 auf den Feldauswertebereich 42 des erfassten Feldabschnitts 34 flächig ausgebracht.

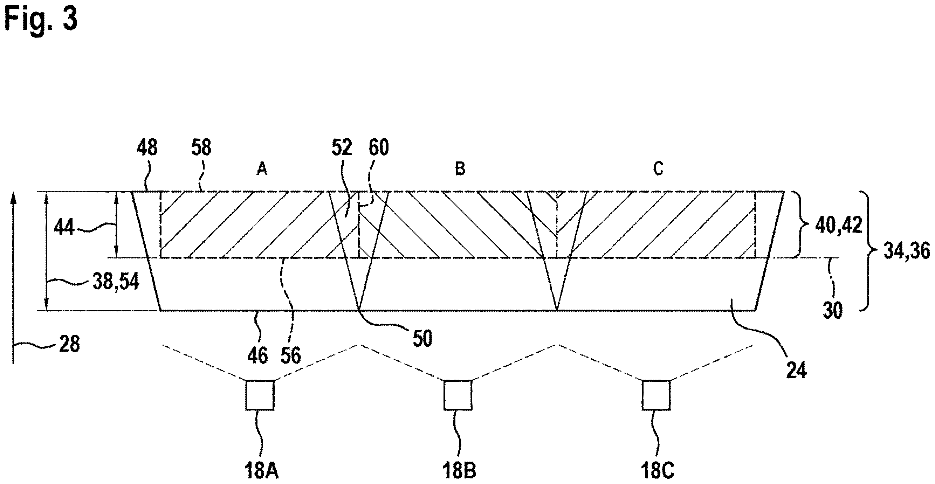

In Fig. 3 ist eine schematische Darstellung einer Anordnung von nach vorne geneigten optischen Erfassungseinheiten bzw. Kameras 18A, 18B, 18C (18A-C) und den entsprechenden erfassten Feldabschnitten 34A, 34B, 34C (34A-C) bzw. Bildinformationen 36A, 36B, 36C (36A-C). Die Bildinformationen 36A-C sind hierbei gleich ausgebildet. Aufgrund der geneigten Kameras 18A-C weisen die Bildinformationen 36A-C in Fahrtrichtung 28 jeweils einen hinteren Bildrand 46 mit einer Breite B(Bild,h) und einen größeren vorderen Bildrand 48 mit einer Breite B(Bild,v) auf. Die vorderen und hinteren Bildränder 46, 48 fluchten jeweils zueinander. Ferner sind aufgrund der vorteilhaften Anordnung der Kameras 18A-C einander zugewandte Endpunkte 50 der hinteren Bildränder 46 kongruent, sodass zwischen zwei Bildinformationen 36A-C ein dreieckförmiger seitlichen Überlappungsbereich 52 resultiert. Der seitliche Überlappungsbereich 52 weist eine Tiefe T(Überlapp) 54 auf, welche der Tiefe T(Bild) 38 der Bildinformationen 36A-C entspricht.

Die Bildauswertebereiche 40A, 40B, 40C (40A-C) weisen in Fahrtrichtung 28 jeweils einen hinteren Auswerterand 56 mit einer Breite B(Auswerte,h) und einen gleich großen vorderen Auswerterand 58 mit eine Breite B(Auswerte,v) auf. Hierbei fluchten vorderen und hinteren Auswerteränder 56, 58 der Bildauswertebereiche 40A-C jeweils zueinander.

Wie ferner aus Fig. 3 ersichtlich, sind die Kameras 18A-C derart angeordnet, dass die Bildauswertebereiche 40A-C in den seitlichen Überlappungsbereichen 52 aneinander angrenzen. Die Bildauswertebereiche 40A-C weisen hierbei eine in Fahrtrichtung 28 Tiefe T(Auswerte) 44 auf, welche kleiner als die Tiefe des Überlappbereiche 52 T(Überlapp) 54. Die Bildauswertebereiche 40A-C weisen ferner einen gemeinsamen seitlichen Rand 60 auf, welcher quer zur Fahrtrichtung 28 mittig im jeweiligen seitlichen Überlappungsbereich 52 angeordnet ist.

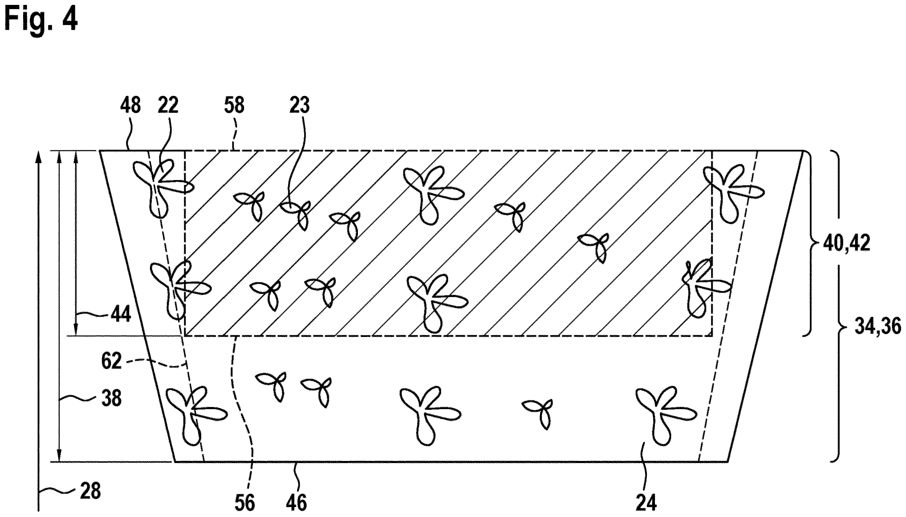

Fig. 4 veranschaulicht ein Ausführungsbeispiel, bei dem Pflanzen 22, 23 in der Bildinformation 36 klassifiziert werden, wobei unter Verwendung der klassifizierten Pflanzen 22 in der gesamten Bildinformation Pflanzenreihen 62 identifiziert werden. Anschließend erfolgt die Ermittlung der Pflanzenkennzahl für den Bildauswertebereich 40 unter Verwendung der klassifizierten Pflanzen 23, wobei eine Spritzentscheidung basierend auf der Pflanzenkennzahl des Bildauswertebereichs 40 erfolgt.

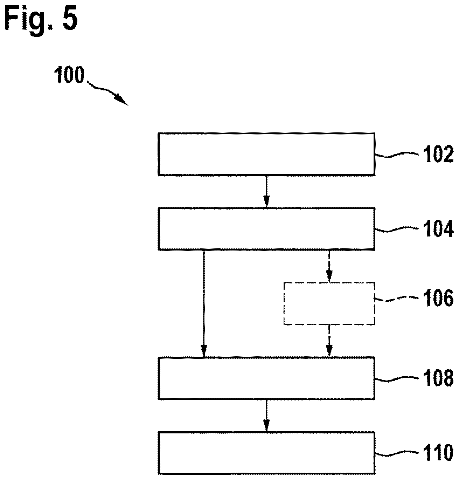

Fig. 5 zeigt ein Ablaufdiagramm eines Verfahrens zum Ausbringen eines Spritzmittels 20 auf eine landwirtschaftliche Fläche 24 mittels zumindest einer Spritzdüseneinheit 16 einer landwirtschaftlichen Spritzvorrichtung 10. Das Verfahren 100 umfasst einen Schritt des Erfassens 102 eines ersten Feldabschnitts 34, 34A-C der landwirtschaftlichen Fläche 24 und eines quer zu einer Fahrtrichtung 28 der landwirtschaftlichen Spritzvorrichtung 10 benachbart zu dem ersten Feldabschnitt 34, 34A-C angeordneten zweiten Feldabschnitts 34, 34a-C der landwirtschaftlichen Fläche 24 mittels zumindest einer optischer Erfassungseinheiten 18, 18A-C, um eine erste Bildinformation 36, 36A-C von dem ersten Feldabschnitt (34, 34A-C) und eine zweite Bildinformation 36, 36A-C von dem zweiten Feldabschnitt 34, 34A-C zu erhalten, wobei die Bildinformationen 36, 36A-C einen gemeinsamen seitlichen Überlappungsbereich 52 mit einer in Fahrtrichtung 28 der landwirtschaftlichen Spritzvorrichtung 10 Tiefe T(Überlapp) 54 aufweisen. Das Verfahren 100 umfasst ferner einen Schritt des Klassifizierens 104 von Pflanzen 22, 23 in den erhaltenen Bildinformationen 36, 36A-C mittels der Steuereinheit. Das Verfahren 100 umfasst außerdem einen Schritt des Ermittelns 108 einer ersten Pflanzenkennzahl für einen ersten Bildauswertebereich 40, 40A-C in der erhaltenen ersten Bildinformation 36, 36A-C und einer zweiten Pflanzenkennzahl für einen zweiten Bildauswertebereich 40, 40A-C in der erhaltenen zweiten Bildinformation 36, 36A-C unter Verwendung der klassifizierten Pflanzen 23 in den Bildauswertebereichen 40, 40A-C mittels der Steuereinheit, wobei die Bildauswertebereiche 40, 40A-C im seitlichen Überlappungsbereich 52 aneinander angrenzen und eine in Fahrtrichtung 28 der landwirtschaftlichen Spritzvorrichtung 10 Tiefe T(Auswerte) 44 aufweisen, welche kleiner als die oder gleich der Tiefe des Überlappbereiches 52 T(Überlapp) 54 ist. Das Verfahren 100 umfasst des Weiteren einen Schritt des Ausbringens 110 des Spritzmittels 20 in Abhängigkeit von der ermittelten zumindest einer Pflanzenkennzahl mittels der Spritzdüseneinheit 16 der landwirtschaftlichen Spritzvorrichtung 10.

Das Verfahren 100 umfasst ferner einen optionalen Schritt des Identifizierens 106 von Pflanzenreihen 62 in den Bildinformationen 36, 36A-C unter Verwendung der klassifizierten Pflanzen 22 in den Bildinformationen 36, 36A-C mittels der Steuereinheit, wobei im Schritt des Ausbringens 110 das Spritzmittel 20 ferner in Abhängigkeit von identifizierten Pflanzenreihen 62 ausgebracht wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Ausbringen eines Spritzmittels (20) auf eine landwirtschaftliche Fläche (24) mittels zumindest einer Spritzdüseneinheit (16) einer landwirtschaftlichen Spritzvorrichtung (10), mit den Schritten:
- Erfassen (102) eines ersten Feldabschnitts (34, 34A-C) der landwirtschaftlichen Fläche (24) und eines quer zu einer Fahrtrichtung (28) der landwirtschaftlichen Spritzvorrichtung (10) benachbart zu dem ersten Feldabschnitt (34, 34A-C) angeordneten zweiten Feldabschnitts (34, 34A-C) der landwirtschaftlichen Fläche (24) mittels zumindest einer optischen Erfassungseinheiten (18, 18A-C), um eine erste Bildinformation (36, 36A-C) von dem ersten Feldabschnitt (34, 34A-C) und eine zweite Bildinformation (36, 36A-C) von dem zweiten Feldabschnitt (34, 34A-C) zu erhalten, wobei die Bildinformationen (36, 36A-C) einen gemeinsamen seitlichen Überlappungsbereich (52) mit einer in Fahrtrichtung (28) der landwirtschaftlichen Spritzvorrichtung (10) Tiefe T(Überlapp) (54) aufweisen;
- Klassifizieren (104) von Pflanzen (22, 23) in den erhaltenen Bildinformationen (36, 36A-C) mittels der Steuereinheit;
- Ermitteln (108) einer ersten Pflanzenkennzahl für einen ersten Bildauswertebereich (40, 40A-C) in der erhaltenen ersten Bildinformation (36, 36A-C) und einer zweiten Pflanzenkennzahl für einen zweiten Bildauswertebereich (40, 40A-C) in der erhaltenen zweiten Bildinformation (36, 36A-C) unter Verwendung der klassifizierten Pflanzen (23) in den Bildauswertebereichen (40, 40A-C) mittels der Steuereinheit, wobei die Bildauswertebereiche (40, 40A-C) im seitlichen Überlappungsbereich (52) aneinander angrenzen und eine in Fahrtrichtung (28) der landwirtschaftlichen Spritzvorrichtung (10) Tiefe T(Auswerte) (44) aufweisen, welche kleiner als die oder gleich der Tiefe des Überlappbereiches (52) T(Überlapp) (54) ist; und
- Ausbringen (110) des Spritzmittels (20) in Abhängigkeit von der ermittelten zumindest einer Pflanzenkennzahl mittels der Spritzdüseneinheit (16) der landwirtschaftlichen Spritzvorrichtung (10).

2. Verfahren (100) nach Anspruch 1, **dadurch gekennzeichnet, dass** die Bildinformationen (36, 36A-C) in Fahrtrichtung (28) jeweils einen hinteren Bildrand (46) mit einer Breite B(Bild,h) und einen gleich großen oder größeren vorderen Bildrand (48) mit einer Breite B(Bild,v) aufweisen.

3. Verfahren (100) nach Anspruch 2, **dadurch gekennzeichnet, dass** die vorderen und hinteren Bildränder (46, 48) der Bildinformationen (36, 36A-C) jeweils zueinander fluchten.

4. Verfahren (100) nach Anspruch 2 oder 3, **dadurch gekennzeichnet, dass** die Breite B(Bild,h) größer ist als die Breite B(Bild,v) der Bildinformationen (36, 36A-C) und einander zugewandte Endpunkte (50) der hinteren Bildränder (46) kongruent sind.

5. Verfahren (100) nach einem der vorhergehenden Ansprüche, **dadurch gekennzeichnet, dass** die Tiefe T(Überlapp) (54) des seitlichen Überlappungsbereichs (52) kleiner ist als oder gleich groß ist wie die Tiefe T(Bild) (38) der Bildinformationen (36, 36A-C).

6. Verfahren (100) nach einem der vorhergehenden Ansprüche, **dadurch gekennzeichnet, dass** die Bildauswertebereiche (40, 40A-C) in Fahrtrichtung (28) jeweils einen hinteren Auswerterand (56) mit einer Breite B(Auswerte,h) und einen gleich großen vorderen Auswerterand (58) mit einer Breite B(Auswerte,v) aufweisen.

7. Verfahren (100) nach Anspruch 6, **dadurch gekennzeichnet, dass** die B(Auswerte) der Bildauswertebereiche (40, 40A-C) mittels der Steuereinheit variabel wählbar ist, um die angrenzenden Anordnung der Bildauswertebereiche (40, 40A-C) zueinander sicherzustellen.

8. Verfahren (100) nach Anspruch 6 oder 7, **dadurch gekennzeichnet, dass** die vorderen und hinteren Auswerteränder (56, 58) der Bildauswertebereiche (40, 40A-C) jeweils zueinander fluchten.

9. Verfahren (100) nach einem der vorhergehenden Ansprüche, **dadurch gekennzeichnet, dass** ein gemeinsamer seitlicher Rand (60) der Bildauswertebereiche (40, 40A-C) quer zur Fahrtrichtung (28) mittig im seitlichen Überlappungsbereich (52) angeordnet ist.

10. Verfahren (100) nach einem der vorhergehenden Ansprüche, **dadurch gekennzeichnet, dass** die Bildauswertebereiche (40, 40A-C) einen entsprechenden Feldauswertebereich (42, 42A-C) der erfassten Feldabschnitte (34, 34A-C) repräsentieren und im Schritt des Ausbringens (110) das Spritzmittel (20) auf den oder die entsprechenden Feldauswertebereich(e) (42, 42A-C) ausgebracht wird.

11. Verfahren (100) nach einem der vorhergehenden Ansprüche, **dadurch gekennzeichnet, dass** die Pflanzenkennzahl einen Bedeckungsgrad des jeweiligen Bildauswertebereichs (40, 40A-C) von pflanzlichem Material und/oder eine Menge an pflanzlichem Material in dem jeweiligen Bildauswertebereich (40, 40A-C) und/oder eine Anzahl von identifizierten Pflanzen (23) in dem jeweiligen Bildwertebereich (40, 40A-C) repräsentiert.

12. Verfahren (100) nach einem der vorhergehenden Ansprüche, **dadurch gekennzeichnet, dass** die Feldabschnitte (34, 34A-C) mit einem Neigungswinkel (a) einer optischen Achse (30) der optischen Erfassungseinheit (18, 18A-C) von größer 0° relativ zu der Vertikalen (32) in Fahrtrichtung (28) der Spritzvorrichtung (10) erfasst werden.

13. Verfahren (100) nach einem der vorhergehenden Ansprüche,
**gekennzeichnet durch** einen Schritt des Identifizierens (106) von Pflanzenreihen (62) in den Bildinformationen (36, 36A-C) unter Verwendung der klassifizierten Pflanzen (22) in den Bildinformationen (36, 36A-C) mittels der Steuereinheit, wobei im Schritt des Ausbringens (110) das Spritzmittel (20) ferner in Abhängigkeit von identifizierten Pflanzenreihen (62) ausgebracht wird.

14. Anordnung mit zumindest einer ersten und zweiten optischen Erfassungseinheit (18, 18A-C), insbesondere wobei eine optische Achse (30) der optischen Erfassungseinheiten (18, 18A-C) einen Neigungswinkel (a) größer 0° relativ zu der Vertikalen (32) in Fahrtrichtung (28) einer Spritzvorrichtung (10) aufweist, wobei die erste optische Erfassungseinheit (18, 18A-C) ausgebildet ist, einen ersten Feldabschnitt (34, 34A-C) der landwirtschaftlichen Fläche (24), und die zweite optische Erfassungseinheit (18, 18A-C) ausgebildet ist, einen quer zu einer Fahrtrichtung (28) der landwirtschaftlichen Spritzvorrichtung (10) benachbart zu dem ersten Feldabschnitt (34, 34A-C) angeordneten zweiten Feldabschnitt (34, 34A-C) der landwirtschaftlichen Fläche (24) zu erfassen, um eine erste Bildinformation (36, 36A-C) von dem ersten Feldabschnitt (34, 34A-C) und eine zweite Bildinformation (36, 36A-C) von dem zweiten Feldabschnitt (34, 34A-C) zu erhalten, wobei die optischen Erfassungseinheiten (18, 18A-C) derart angeordnet sind, dass die Bildinformationen (36, 36A-C) einen gemeinsamen seitlichen Überlappungsbereich (52) mit einer in Fahrtrichtung (28) der landwirtschaftlichen Spritzvorrichtung (10) Tiefe T(Überlapp) (54) aufweisen, sodass definierte Bildauswertebereiche (40, 40A-C) in den erhaltenen Bildinformationen (36, 36A-C) im seitlichen Überlappungsbereich (52) aneinander angrenzen und eine in Fahrtrichtung (28) der landwirtschaftlichen Spritzvorrichtung (10) Tiefe T(Auswerte) (44) aufweisen, welche kleiner als die oder gleich der Tiefe des Überlappbereiches (52) T(Überlapp) (54) ist.

15. Landwirtschaftliche Spritzvorrichtung (10) zum Ausbringen eines Spritzmittels (20) auf eine landwirtschaftliche Fläche (24) mit zumindest einer Spritzdüseneinheit (16) und einer Anordnung gemäß Anspruch 14.

16. Computerprogramm das dazu eingerichtet ist, die Schritte eines Verfahrens nach einem der Ansprüche 1 bis 13 auszuführen, wenn das Computerprogramm auf einem Computer ausgeführt wird.

17. Maschinenlesbares Speichermedium mit dem darauf gespeicherten Computerprogramm nach Anspruch 16.

## Claims

1. Method (100) for applying a spray (20) to an agricultural surface (24) by means of at least one spray nozzle unit (16) of an agricultural spraying apparatus (10), having the steps of:
- capturing (102) a first field section (34, 34A-C) of the agricultural surface (24) and a second field section (34, 34A-C), arranged adjacent to the first field section (34, 34A-C) transversely with respect to a direction of travel (28) of the agricultural spraying apparatus (10), of the agricultural surface (24) by means of at least one optical capture unit (18, 18A-C) in order to obtain a first piece of image information (36, 36A-C) from the first field section (34, 34A-C) and a second piece of image information (36, 36A-C) from the second field section (34, 34A-C), the pieces of image information (36, 36A-C) having a common lateral overlap area (52) with a depth T(overlap) (54) in the direction of travel (28) of the agricultural spraying apparatus (10);
- classifying (104) plants (22, 23) in the obtained pieces of image information (36, 36A-C) by means of the control unit;
- determining (108) a first plant metric for a first image evaluation area (40, 40A-C) in the obtained first piece of image information (36, 36A-C) and a second plant metric for a second image evaluation area (40, 40A-C) in the obtained second piece of image information (36, 36A-C) by means of the control unit by using the classified plants (23) in the image evaluation areas (40, 40A-C), the image evaluation areas (40, 40A-C) adjoining one another in the lateral overlap area (52) and having a depth T(evaluate) (44) in the direction of travel (28) of the agricultural spraying apparatus (10) that is less than or equal to the depth of the overlap area (52) T(overlap) (54); and
- applying (110) the spray (20) by means of the spray nozzle unit (16) of the agricultural spraying apparatus (10) on the basis of the determined at least one plant metric.

2. Method (100) according to Claim 1, **characterized in that** each piece of image information (36, 36A-C) has a rear image edge (46) having a width B(image, h) and an identically sized or larger front image edge (48) having a width B(image,v) in the direction of travel (28).

3. Method (100) according to Claim 2, **characterized in that** the front and rear image edges (46, 48) of the pieces of image information (36, 36A-C) are aligned with one another in each case.

4. Method (100) according to Claim 2 or 3, **characterized in that** the width B(image, h) is greater than the width B(image, v) of the image information (36, 36A-C) and mutually facing endpoints (50) of the rear image edges (46) are congruent.

5. Method (100) according to one of the preceding claims, **characterized in that** the depth T(overlap) (54) of the lateral overlap area (52) is less than or of equal magnitude to the depth T(image) (38) of the pieces of image information (36, 36A-C).

6. Method (100) according to one of the preceding claims, **characterized in that** each of the image evaluation areas (40, 40A-C) has a rear evaluation edge (56) having a width B(evaluate,h) and an identically sized front evaluation edge (58) having a width B(evaluate,v) in the direction of travel (28).

7. Method (100) according to Claim 6, **characterized in that** the B(evaluate) of the image evaluation areas (40, 40A-C) is variably selectable by means of the control unit in order to ensure that the image evaluation areas (40, 40A-C) are arranged in a manner adjoining one another.

8. Method (100) according to Claim 6 or 7, **characterized in that** the front and rear evaluation edges (56, 58) of the image evaluation areas (40, 40A-C) are aligned with one another in each case.

9. Method (100) according to one of the preceding claims, **characterized in that** a common lateral edge (60) of the image evaluation areas (40, 40A-C) is arranged centrally in the lateral overlap area (52) transversely with respect to the direction of travel (28).

10. Method (100) according to one of the preceding claims, **characterized in that** the image evaluation areas (40, 40A-C) represent a corresponding field evaluation area (42, 42A-C) of the captured field sections (34, 34A-C) and the step of application (110) involves the spray (20) being applied to the corresponding field evaluation area(s) (42, 42A-C).

11. Method (100) according to one of the preceding claims, **characterized in that** the plant metric represents a degree of coverage of the respective image evaluation area (40, 40A-C) with plant material and/or an amount of plant material in the respective image evaluation area (40, 40A-C) and/or a number of identified plants (23) in the respective image evaluation area (40, 40A-C).

12. Method (100) according to one of the preceding claims, **characterized in that** the field sections (34, 34A-C) are captured with an angle of inclination (a) of an optical axis (30) of the optical capture unit (18, 18A-C) of greater than 0° relative to the vertical (32) in the direction of travel (28) of the spraying apparatus (10).

13. Method (100) according to one of the preceding claims, **characterized by** a step of identifying (106) rows of plants (62) in the pieces of image information (36, 36A-C) by means of the control unit by using the classified plants (22) in the pieces of image information (36, 36A-C), the step of application (110) involving the spray (20) further being applied on the basis of identified rows of plants (62).

14. Arrangement having at least a first and a second optical capture unit (18, 18A-C), in particular wherein an optical axis (30) of the optical capture units (18, 18A-C) has an angle of inclination (a) greater than 0° relative to the vertical (32) in the direction of travel (28) of a spraying apparatus(10), the first optical capture unit (18, 18A-C) being configured to capture a first field section (34, 34A-C) of the agricultural surface (24), and the second optical capture unit (18, 18A-C) being configured to capture a second field section (34, 34A-C), arranged adjacent to the first field section (34, 34A-C) transversely with respect to a direction of travel (28) of the agricultural spraying apparatus (10), of the agricultural surface (24) in order to obtain a first piece of image information (36, 36A-C) from the first field section (34, 34A-C) and a second piece of image information (36, 36A-C) from the second field section (34, 34A-C), the optical capture units (18, 18A-C) being arranged in such a way that the pieces of image information (36, 36A-C) have a common lateral overlap area (52) with a depth T(overlap) (54) in the direction of travel (28) of the agricultural spraying apparatus (10), with the result that defined image evaluation areas (40, 40A-C) in the obtained pieces of image information (36, 36A-C) adjoin one another in the lateral overlap area (52) and have a depth T(evaluate) (44) in the direction of travel (28) of the agricultural spraying apparatus (10) that is less than or equal to the depth of the overlap area (52) T(overlap) (54).

15. Agricultural spraying apparatus (10) for applying a spray (20) to an agricultural surface (24) using at least one spray nozzle unit (16) and an arrangement according to Claim 14.

16. Computer program designed to carry out the steps of a method according to one of Claims 1 to 13 when the computer program is executed on a computer.

17. Machine-readable storage medium with the computer program according to Claim 16 stored thereon.

## Revendications

1. Procédé (100) destiné à appliquer un agent de pulvérisation (20) sur une surface agricole (24) au moyen d'au moins une unité à buse de pulvérisation (16) d'un dispositif de pulvérisation agricole (10), comprenant les étapes consistant à :
- détecter (102) une première section de champ (34, 34A-C) de la surface agricole (24) et une seconde section de champ (34, 34A-C) de la surface agricole (24) qui est disposée de manière transversale à la direction de déplacement (28) du dispositif de pulvérisation agricole (10) et de manière adjacente à la première section de champ (34, 34A-C), au moyen d'au moins une unité de détection optique (18, 18A-C) afin d'obtenir des premières informations d'image (36, 36A-C) sur la première section de champ (34, 34A-C) et des secondes informations d'image (36, 36A-C) sur la seconde section de champ (34, 34A-C), les informations d'image (36, 36A-C) présentant une zone de chevauchement latérale commune (52) ayant une profondeur T(chevauchement) (54) dans la direction de déplacement (28) du dispositif de pulvérisation agricole (10) ;
- classifier (104) les plantes (22, 23) dans les informations d'image obtenues (36, 36A-C) au moyen de l'unité de commande ;
- déterminer (108) un premier nombre caractéristique de plantes pour une première zone d'évaluation d'image (40, 40A-C) dans les premières informations d'image obtenues (36, 36A-C) et un second nombre caractéristique de plantes pour une seconde zone d'évaluation d'image (40, 40A-C) dans les secondes informations d'image obtenues (36, 36A-C) au moyen de l'unité de commande par utilisation des plantes classifiées (23) dans les zones d'évaluation d'image (40, 40A-C), les zones d'évaluation d'image (40, 40A-C) étant adjacentes l'une à l'autre dans la zone de chevauchement latérale (52) et ayant une profondeur T(évaluation) (44), dans la direction de déplacement (28) du dispositif de pulvérisation agricole (10), qui est inférieure ou égale à la profondeur de la zone de chevauchement (52) T(chevauchement) (54) ; et
- appliquer (110) l'agent de pulvérisation (20) au moyen de l'unité à buse de pulvérisation (16) du dispositif de pulvérisation agricole (10) en fonction dudit au moins un nombre caractéristique de plantes déterminé.

2. Procédé (100) selon la revendication 1, **caractérisé en ce que** les informations d'image (36, 36A-C) présentent respectivement, dans la direction de déplacement (28), un bord d'image arrière (46) ayant une largeur B(image,h) et un bord d'image avant (48) de largeur égale ou supérieure ayant une largeur B(image,v).

3. Procédé (100) selon la revendication 2, **caractérisé en ce que** les bords d'image avant et arrière (46, 48) des informations d'image (36, 36A-C) sont respectivement alignés les uns par rapport aux autres.

4. Procédé (100) selon la revendication 2 ou 3, **caractérisé en ce que** la largeur B(image,h) est supérieure à la largeur B(image,v) des informations d'image (36, 36A-C) et **en ce que** les points d'extrémité (50) en face les uns des autres des bords d'image arrière (46) sont congruents.

5. Procédé (100) selon l'une quelconque des revendications précédentes, **caractérisé en ce que** la profondeur T(chevauchement) (54) de la zone de chevauchement latérale (52) est inférieure ou égale à la profondeur T(image) (38) des informations d'image (36, 36A-C).

6. Procédé (100) selon l'une quelconque des revendications précédentes, **caractérisé en ce que** les zones d'évaluation d'image (40, 40A-C) présentent respectivement, dans la direction de déplacement (28), un bord d'évaluation arrière (56) ayant une largeur B(évaluation,h) et un bord d'évaluation avant (58) de même largeur ayant une largeur B(évaluation,v).

7. Procédé (100) selon la revendication 6, **caractérisé en ce que** la B(évaluation) des zones d'évaluation d'image (40, 40A-C) est sélectionnable de manière variable au moyen de l'unité de commande pour assurer l'agencement adjacent des zones d'évaluation d'image (40, 40A-C) l'une par rapport à l'autre.

8. Procédé (100) selon la revendication 6 ou 7, **caractérisé en ce que** les bords d'évaluation avant et arrière (56, 58) des zones d'évaluation d'image (40, 40A-C) sont respectivement alignés l'un par rapport à l'autre.

9. Procédé (100) selon l'une quelconque des revendications précédentes, **caractérisé en ce qu'**un bord latéral commun (60) des zones d'évaluation d'image (40, 40A-C) est disposé de manière centrale dans la zone de chevauchement latérale (52) transversalement à la direction de déplacement (28).

10. Procédé (100) selon l'une quelconque des revendications précédentes, **caractérisé en ce que** les zones d'évaluation d'image (40, 40A-C) représentent une zone d'évaluation de champ (42, 42A-C) correspondante des sections de champ détectées (34, 34A-C) et **en ce que**, lors de l'étape d'application (110), l'agent de pulvérisation (20) est appliqué sur la ou les zone(s) d'évaluation de champ (42, 42A-C) correspondante(s).

11. Procédé (100) selon l'une quelconque des revendications précédentes, **caractérisé en ce que** le nombre caractéristique de plantes représente un degré de couverture de la zone d'évaluation d'image (40, 40A-C) respective par du matériel végétal et/ou une quantité de matériel végétal dans la zone d'évaluation d'image (40, 40A-C) respective et/ou un nombre de plantes identifiées (23) dans la zone d'évaluation d'image (40, 40A-C) respective.

12. Procédé (100) selon l'une quelconque des revendications précédentes, **caractérisé en ce que** les sections de champ (34, 34A-C) sont détectées avec un angle d'inclinaison (a) d'un axe optique (30) de l'unité de détection optique (18, 18A-C) qui est supérieur à 0° par rapport à la verticale (32) dans la direction de déplacement (28) du dispositif de pulvérisation (10).

13. Procédé (100) selon l'une quelconque des revendications précédentes, **caractérisé par** une étape consistant à identifier (106) des rangées de plantes (62) dans les informations d'image (36, 36A-C) par utilisation des plantes classifiées (22) dans les informations d'image (36, 36A-C) au moyen de l'unité de commande, l'agent de pulvérisation (20), lors de l'étape d'application (110), étant en outre appliqué en fonction des rangées de plantes identifiées (62).

14. Dispositif comprenant au moins une première et une seconde unité de détection optique (18, 18A-C), un axe optique (30) des unités de détection optiques (18, 18A-C) présentant en particulier un angle d'inclinaison (a) supérieur à 0° par rapport à la verticale (32) dans la direction de déplacement (28) d'un dispositif de pulvérisation (10), la première unité de détection optique (18, 18A-C) étant conçue pour détecter une première section de champ (34, 34A-C) de la surface agricole (24), et la seconde unité de détection optique (18, 18A-C) étant conçue pour détecter une seconde section de champ (34, 34A-C) de la surface agricole (24) qui est disposée de manière transversale à la direction de déplacement (28) du dispositif de pulvérisation agricole (10) et de manière adjacente à la première section de champ (34, 34A-C), afin d'obtenir des premières informations d'image (36, 36A-C) sur la première section de champ (34, 34A-C) et des secondes informations d'image (36, 36A-C) sur la seconde section de champ (34, 34A-C), les unités de détection optiques (18, 18A-C) étant disposées de manière à ce que les informations d'image (36, 36A-C) présentent une zone de chevauchement latérale commune (52) ayant une profondeur T(chevauchement) (54) dans la direction de déplacement (28) du dispositif de pulvérisation agricole (10), de telle sorte que des zones d'évaluation d'image (40, 40A-C) définies dans les informations d'image obtenues (36, 36A-C) soient adjacentes les unes aux autres dans la zone de chevauchement latérale (52) et présentent une profondeur T(évaluation) (44), dans la direction de déplacement (28) du dispositif de pulvérisation agricole (10), qui est inférieure ou égale à la profondeur de la zone de chevauchement (52) T(chevauchement) (54).

15. Dispositif de pulvérisation agricole (10) destiné à appliquer un agent de pulvérisation (20) sur une surface agricole (24), comprenant au moins une unité à buse de pulvérisation (16) et un dispositif selon la revendication 14.

16. Programme d'ordinateur qui est conçu pour mettre en oeuvre un procédé selon l'une quelconque des revendications 1 à 13 lorsque le programme d'ordinateur est exécuté sur un ordinateur.

17. Support de stockage lisible par machine sur lequel est stocké un programme d'ordinateur selon la revendication 16.
